# EUROPEAN PATENT APPLICATION

(11) **EP 1 835 400 A1**
(43) Date of publication of application: **19.09.2007**
(21) Application number: 06251436.9
(22) Date of filing: 17.03.2006
(51) Int. Cl.: G06F 9/46, G06F 17/30, G06Q 20/00

(54) **Transaction processing method**

(71) Applicant: Voca Limited, Homestead Road, Rickmansworth Hertfordshire WD3 1FX (GB)
(72) Inventor: Masterson-Jones, Nick, Souldern, Oxon OX27 7JD (GB); Soo, William, Northway Rickmansworth Herts WD3 1QA (GB)
(74) Representative: Fennell, Gareth Charles

(57) **Abstract**

A data processing method for performing a processing step on a data set. One or more data sets are stored in a database and each data set has an associated indicator entry in the database which indicates that the data set is ready for the processing step to be performed. The method comprises: (a) providing multiple parallel processing operations for performing the processing step on a respective data set, each processing operation arranged to perform an atomic database transaction for an indicator entry and associated data set. The atomic database transaction comprises: (i) operating on the indicator entry so that it no longer indicates that the data set is ready for the processing step to be performed; and (ii) performing the processing step on the data set associated with the indicator entry. The method further comprises (b) responsive to the presence of an indicator entry in the database which indicates that an associated data set is ready for processing, one of the multiple parallel processing operations performing the atomic database transaction for the indicator entry and associated data set.

## Description

The present invention relates to a data processing method, in particular an electronic or computer-implemented data processing method.

Data processing using computers has now become commonplace. However, computers are not 100% reliable and computer errors, sometimes referred to as glitches or crashes, can cause errors in data processing activities. This can mean that a particular data processing activity such as processing a patient record; processing a credit card or other type of payment; or processing a billing record for a telephone call may fail and may never be completed. In certain circumstances, e.g. if following a failure a set of data processing activities are repeated to ensure that they are completed, there is a chance that some activities will be completed more than once. This means that a process which only needs to be performed once may be performed zero, one or more times or indeed may be performed incompletely.

In most circumstances failing to perform a data processing activity is at least undesirable. Likewise in most circumstances completing an activity more than once is undesirable. However, in certain applications it is important to ensure that there is certainty in a data processing activity being performed, i.e. that the activity is performed once and only once. An example of such an application is processing of financial transactions, for example the processing of financial transactions through BACS (Bankers Automated Clearing Services) system in the United Kingdom which is used for the electronic processing of financial transactions such as direct debit and direct credit financial transactions between banks. In such an application it is important that the financial transactions are completed once and only once.

Other examples where it is considered important to ensure that a data processing activity is performed once and only once include billing for goods or services and ordering of stock in a supply chain, for example.

Accordingly, one technical problem in data processing is that of ensuring there is certainty that a data processing activity is performed.

Another technical problem is that of ensuring that the processing is performed at an acceptable rate.

Some data processing activities are performed on a data set which may contain a large number of records, each of which need to be processed. Such a data set is sometimes referred to as a batch. Often many batches need to be processed. This is typically true for the processing of a batch of financial transaction records, for example through BACS.

The technical problem of ensuring that the processing is performed at an acceptable rate is a particular concern when considering data sets containing a large number of records.

The present invention has been made with the above considerations in mind.

The present invention is set out in the accompanying claims.

By providing multiple parallel processing operations for performing the processing step on a data set, a higher processing rate can be achieved to process data sets.

Each of the multiple parallel processing operations is arranged to perform an atomic database transaction. Atomicity is a property of a transaction which means that either all steps of a transaction succeed, or the entire transaction is rolled back. This means that partial completion is not observed. An atomic database transaction is therefore one which either sucessfully completes or the entire transaction is rolled back.

One or more data sets are stored in a database and each data set has an associated indicator entry in the database which indicates that the data set is ready for the processing step to be performed. By each of the parallel processing operations being operable to perform an atomic database transaction in which the entry is operated on so that it no longer indicates that the data set is ready for the processing step to be performed and by one parallel processing operation performing the transaction in response to the presence of an indicator entry indicating that an associated data set is ready for processing, it is ensured that the processing step is performed by only one processing operation and not by multiple processing operations. This is because once one processing operation has started the atomic database transaction and operated on the indicator entry another processing operation cannot start on the same indicator entry and data set.

By one or more data sets and associated indicator entries being stored in a database and each of the parallel processing operations being operable to perform an atomic database transaction, it is ensured that if the processing operation fails, the database will roll back to the unprocessed state for that atomic database transaction. Accordingly the relevant data set will roll back to an unprocessed state and the relevant indicator entry will also roll back to an unmodified (un-operated on) state i.e. the indicator entry will indicate that the associated data set is ready for processing. With the indicator entry in this state, the atomic database transaction (and hence the processing step) can then be performed by one of the processing operations. This operation may be the same processing operation as the one which failed or another one. Accordingly, it is ensured that the processing step is performed once (and not unperformed, incompletely performed or performed more than once) for each data set.

Thus, certainty of performing a data processing method or activity is ensured.

Embodiments of the invention will now be described, by way of example only, with reference to the accompanying figures in which:
Figure 1 is an overview of a network, computer and a database of an embodiment of the present invention;
Figure 2a schematically illustrates a processing step performed on respective data sets by respective parallel processing operations of an embodiment of the present invention;
Figures 2b and 2c illustrate a data set and dedicated area in a database for storing an indicator entry in before and after processing step states, respectively, of an embodiment of the present invention;
Figure 3 illustrates a relationship between the data set, dedicated area, computer and database of an embodiment of the present invention;
Figure 4 is a flow diagram showing the operational steps of an atomic database transaction of a processing operation of an embodiment of the present invention;
Figures 5a and 5b are flow diagrams showing the operational steps of a process initiation manager module and a process initiation check module, respectively, of alternative embodiments of the present invention;
Figure 6a schematically illustrates parallel processing steps of n sequential processing steps of an embodiment of the present invention;
Figures 6b to 6g illustrate an indicator entry being passed from dedicated area to dedicated area as the process moves from before step 1 through the sequential steps to after the nth step in an embodiment of the present invention;
Figure 7 illustrates an example snapshot of various indicator entries stored in various dedicated areas of an embodiment of the present invention;
Figures 8a to 8d illustrate splitting of an indicator entry in an embodiment of the present invention;
Figure 9 is a flow diagram illustrating the operational steps of an atomic database transaction in which an indicator entry for the next processing step is stored as part of the atomic database transaction in an embodiment of the present invention;
Figure 10 is a flow diagram illustrating the operational steps of a zeroth step in an embodiment of the present invention;
Figure 11 is a flow diagram illustrating the operational steps of an nth (final) step of an embodiment of the present invention; and
Figure 12 is a schematic depiction of a computer for use in an embodiment of the present invention.

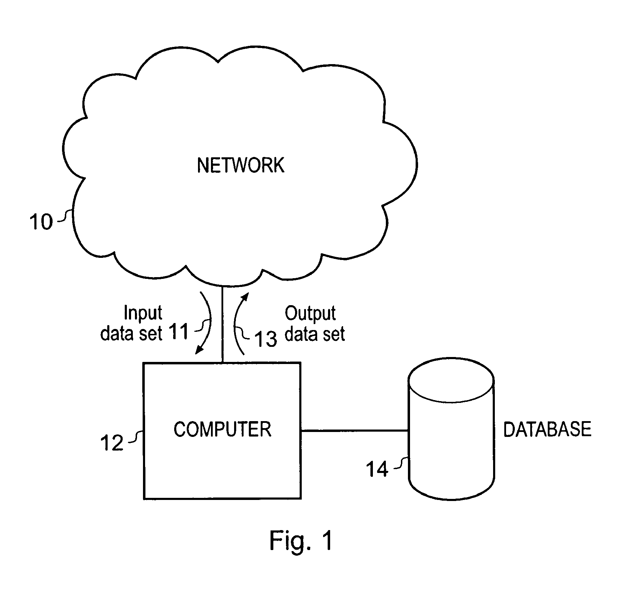

Referring to Figure 1, an overview of a network 10, computer 12 and database 14 is shown. Computer 12 may be one or more actual computer systems and database 14 may reside within the computer 12. The network may be the internet.

Input data set(s) 11 is sent by a sending entity across the network 10 to the computer 12. The data set is stored in the database 14 and one or more processing steps are performed on the data set. The resulting output data set(s) 13 are sent to one or more recipient entities across a network, which may be network 10 or another network.

In an example embodiment the data set comprises a set of financial transaction records sent from a first bank. The financial transaction records include direct credit and direct debit transactions from client accounts of the first bank to client accounts of other banks. The one or more data processing steps sort the financial transaction records into one or more output data sets, each output data set comprising records with transactions to accounts of a particular one of the other banks. Each output data set is then sent to the particular other bank. Records can be received from any of a plurality of banks, processed and set on to any of a plurality of banks.

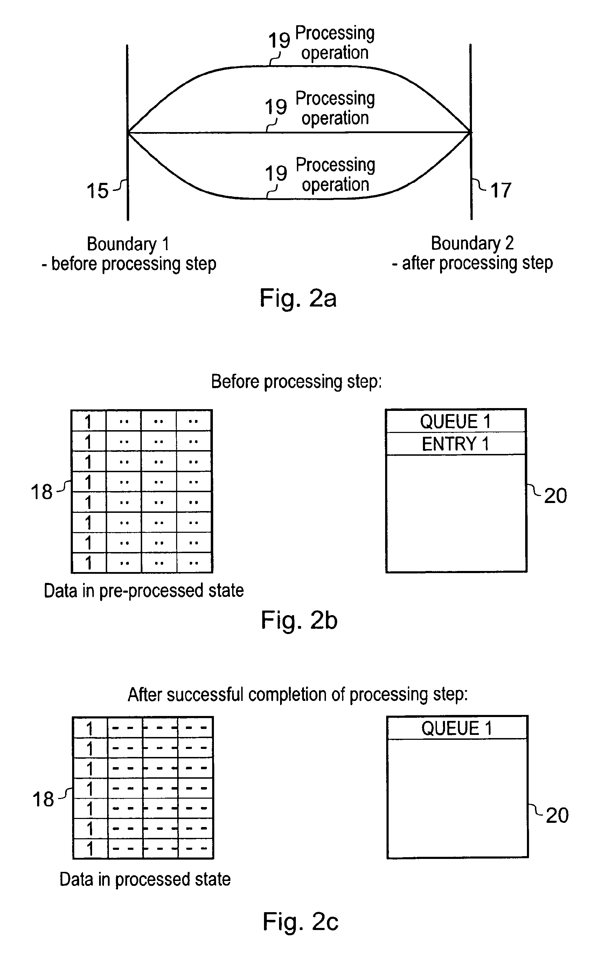

Figure 2a schematically illustrates a parallel processing step performed by respective parallel processing operations. Three parallel processing operations 19 are shown, each operating on a different data set to process the data set from a pre-processing state (i.e. before a processing operation is performed or, in other words, before the processing step) represented as boundary 1 (15) to a post-processing state (i.e. after a processing operation is performed or after the processing step) represented as boundary 2 (17). That is to say, each processing operation processes a respective data set through the same or equivalent processing step.

Figures 2b and 2c illustrate a data set 18 and dedicated area 20 in a database for storing an indicator entry in before and after processing operation states respectively.

Referring to Figure 2b, an indicator entry ("ENTRY 1") is stored in the dedicated area 20, here a database table called "QUEUE 1". The indicator entry is associated with the data set, here by "ENTRY 1" corresponding to the "1" in the left hand column of each record of data set 18. The indicator entry indicates that the data set is ready for a processing step to be performed.

Multiple parallel processing operations (e.g. Java threads) for performing the processing step on respective data sets are provided. The processing operations are depicted in Figure 2a. Each processing operation is arranged or configured to operate on an indicator entry so that it indicates that the data set is no longer ready for the processing step to be performed (e.g. by removing the entry from the queue) and to perform the processing step on the data set associated with the indicator entry.

Referring to Figure 2c, after successful completion of a processing operation, the processing step has been performed on the data (e.g. each record has been checked, updated and/or in some way operated upon) and the indicator entry has been operated on, in this case removed from QUEUE 1 which is shown as empty in the Figure.

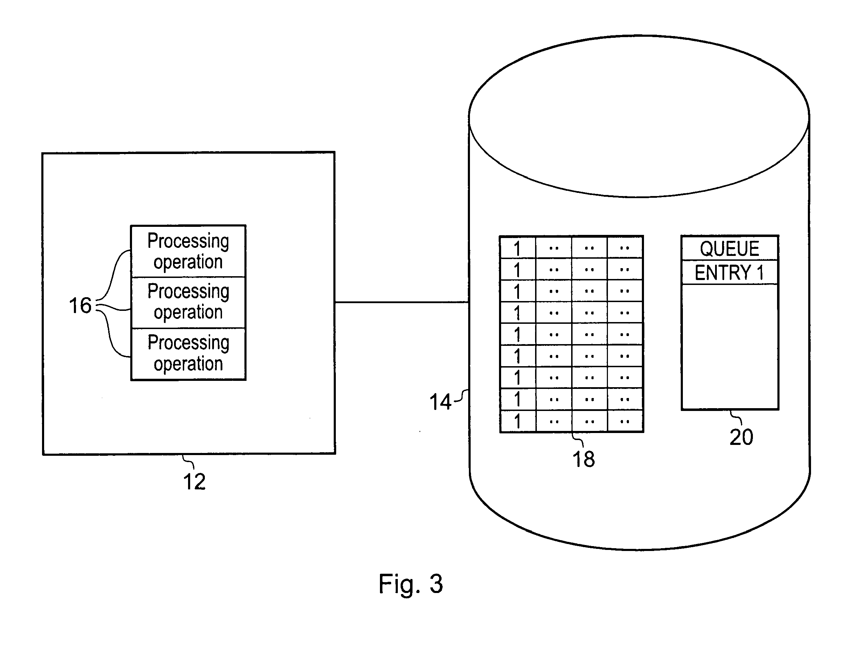

Figure 3 illustrates a relationship of one embodiment of the data set 18 and dedicated area 20 which reside in database 14. The processing operations 16 are configured on computer 12.

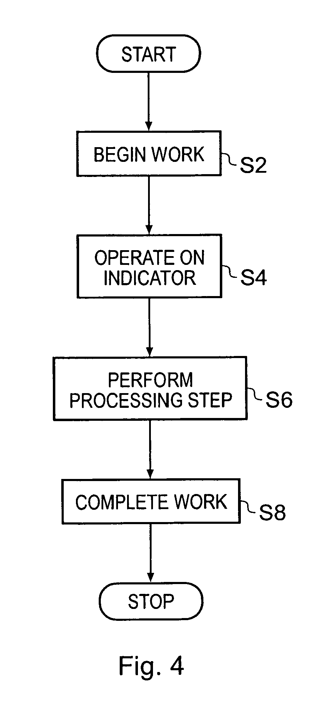

Each of the multiple parallel processing operations is arranged or configured to perform the processing step as part of an atomic database transaction. One of the processing operations is initiated in response to the presence of an indicator entry in the database which indicates that an associated data set is ready for processing. Figure 4 is a flow diagram showing the operational steps of an atomic database transaction of a processing operation 16.

At step S2 the atomic database transaction begins.

At step S4 the indicator entry is operated upon so that it no longer indicates that the data set is ready for the processing step to be performed. This may be by marking or deactivating the indicator entry in some way, or by moving the indicator entry to another area of the database. In one embodiment this is by removing the indicator entry from the dedicated area 20 of the database 14.

At step S6 the processing step is performed on the data set associated with the indicator entry (e.g. checking or updating the records of the data set).

At step S8 the atomic database transaction completes.

Since the processing step is performed as part of an atomic database transaction, either the whole of steps S2 to S8 complete and the state of the database changes from that of Figure 2a to that of Figure 2b or the process fails and the state of the database rolls back to that of Figure 2a.

If the state of the database rolls back to that of Figure 2a then the indicator entry indicates that the data set is ready for the processing step to be performed and the process of Figure 4 is repeated. This means that the process will be performed once (not zero times).

Since step S6 is performed after step S4, it is not possible for the processing step to be performed twice. This means that the process is performed once (not more than once).

Typically multiple data sets are stored in the database. Advantageously, by providing multiple parallel processing operations different processing operations performing the same or equivalent processing step can be used to process different data sets so that the different data sets can be processed through the same or equivalent processing step in parallel.

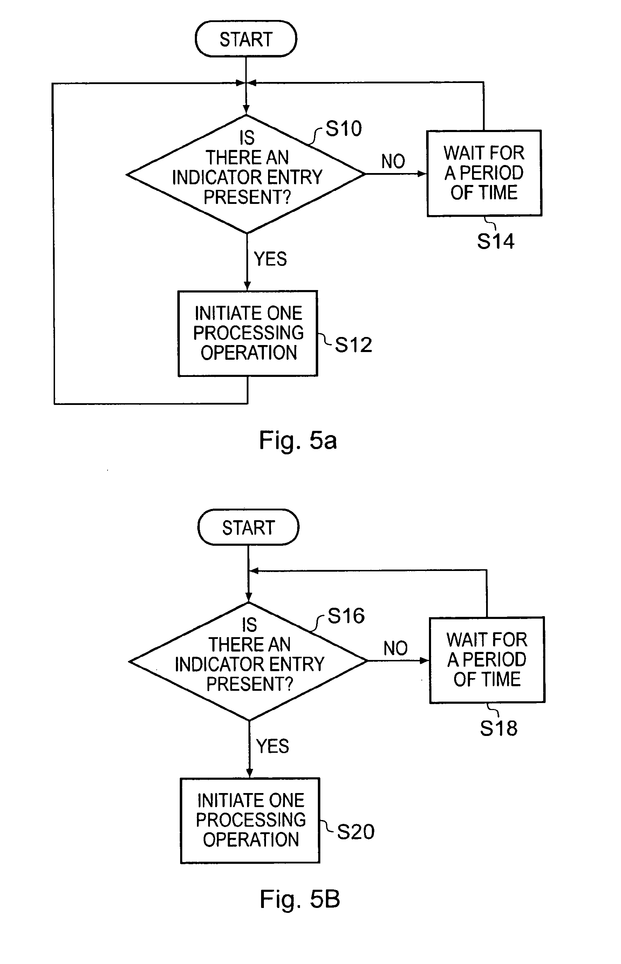

Typically, one of the multiple parallel processing operations is initiated by checking the database for an indicator entry. There is more than one way in which this can be performed as will be appreciated from the discussion of Figures 5a and 5b.

Figures 5a is a flow diagram showing the operational steps of a process initiation manager module for managing the initiation of the parallel processing operations for a particular processing step. The process initiation manager module is arranged to check the database for an indicator entry and responsive to the presence of an indicator entry to initiate one of the multiple parallel processing operations.

At step S 10 the module checks to see if there is an indicator entry present in the dedicated area of the database. If there is not an entry present, at step S 14 the module waits for a period of time before repeating step S10 again. If there is an entry present, the module initiates one of the parallel processing operations at step 12 before repeating step S10, again after an optional wait for a period of time.

Figures 5b is a flow diagram showing the operational steps of a process initiation check module which is an alternative to the process initiation manager module of Figure 5a. For each of the parallel processing operations a process initiation check module is arranged to periodically check the database for an indicator entry and responsive to the presence of an indicator entry to initiate the associated parallel processing operation. Only one process may operate on an indicator entry at a time.

At step S16 the module checks to see if there is an indicator entry present in the dedicated area 20 of the database 14. If there is no entry present, the module waits for a period of time at step S 18. If there is an entry present the module initiates the processing operation at step S20. Steps S2 to S8 of Figure 4 are accordingly performed. The module illustrated in Figure 5b then returns to step S16.

The process initiation check module may be separate from its respective processing operation, or each processing operation may comprise a process initiation check module as part of the operation itself (e.g. implemented before step S2 of Figure 4).

In one embodiment each set of data has a pre-existing identifier (e.g. a batch number) and the pre-existing identifier is used as the indicator entry, the method comprising storing the pre-existing identifier in the dedicated area. For example, referring back to Figure 2b, the left hand column of data set 18 may be the batch number and this number can be used as the indicator entry in QUEUE 1.

The indicator entry can be considered as a token in some embodiments.

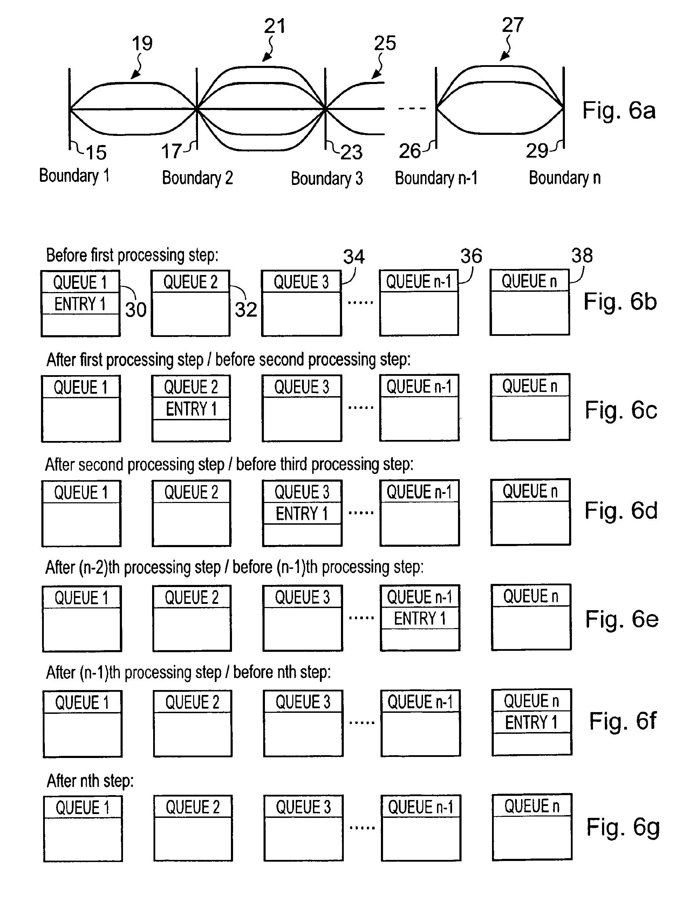

An embodiment provides a data processing method for performing multiple processing steps on a data set wherein there are n sequential processing steps, n being 2 or more. Figure 6a schematically illustrates parallel processing operations, each performing a processing step of n sequential processing steps Referring to Figure 6a, the three parallel processing operations 19 for the first step progressing the process from boundary 1 (15) to boundary 2 (17) are shown (cf Figure 2a). Five parallel processing operations 21 are shown for the second sequential step which progresses the process from boundary 2 (17) to boundary 3 (23). Three parallel processing operations 25 are shown for the third step progressing the process from boundary 3 (23). Four parallel processing operations 27 progress the process for the (n-1)th step from boundary n-1 (26) to boundary n (29).

Figures 6b to 6g illustrate an indicator entry being passed from dedicated area to dedicated area as the process moves from before step 1 through the sequential steps to after the nth step. Each processing step has a dedicated area, here database tables 30, 32, 34, 36 and 38 named as QUEUES 1, 2, 3, n-1 and n respectively. When an indicator entry is stored in a particular queue the processing operation for the respective step is initiated in the manner already described.

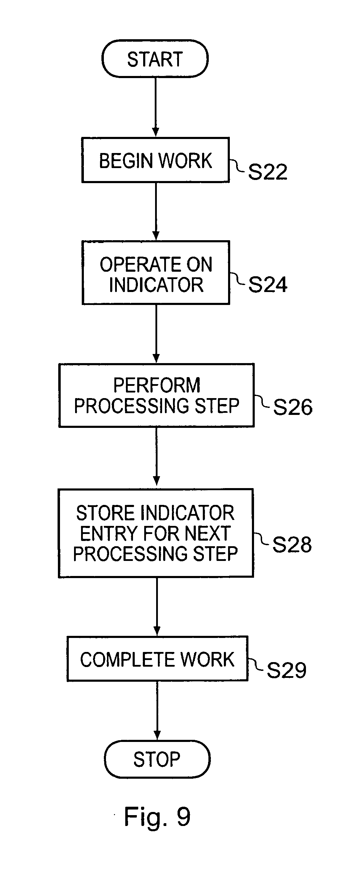

In Figures 6b to 6g n iterations are performed. The atomic database transaction for each iteration from the first iteration to the (n-1)th iteration comprises storing in the database the indicator entry for the next processing step. Figure 9 is a flow diagram illustrating the operational steps of an atomic database transaction in which an indicator entry for the next processing step is stored as part of the atomic database transaction at step S28 after steps S22 to S26 have been performed which correspond to steps S2 to S6 of Figure 4. At step S29 the atomic database transaction completes.

If any step fails the database rolls back and the step will be repeated as previously discussed. Performing step S28 as part of the atomic database transaction means that the dedicated area for storing the indicator entry for the next processing step is rolled back as well. Accordingly, a later step can only be performed once the preceding step has been successfully completed.

Referring to Figure 6b the state before the first processing step is shown. Indicator entry 1 (associated with data set 1) is stored in QUEUE 1. One of processing operations 1 (19) is therefore initiated. The process of Figure 9 is performed which at step S28 stores the indicator entry in QUEUE 2 as shown in Figure 6c which shows the state after the first processing step and before the second processing step.

Indicator entry 1 (associated with data set 1) is now stored in QUEUE 2. One of processing operations 2 (21) is therefore initiated. The process of Figure 9 is performed which at step S28 stores the indicator entry in QUEUE 3 as shown in Figure 6d which shows the state after the second processing step and before the third processing step.

Indicator entry 1 (associated with data set 1) is now stored in QUEUE 3. One of processing operations 3 (25) is therefore initiated. The process of Figure 9 is performed which at step S28 stores the indicator entry in QUEUE 4 (not shown).

The process continues until indicator entry 1 (associated with data set 1) is now stored in QUEUE n-1. One of processing operations n-1 is therefore initiated. The process of Figure 9 is performed which at step S28 stores the indicator entry in QUEUE n.

Thus, in one embodiment each processing step has a particular dedicated area in the database for storing indicator entries which indicate that the data set is ready for the particular processing step to be performed, and the atomic database transaction for each iteration from the first iteration to the (n-1)th iteration comprises:
(i) removing the indicator entry from the particular dedicated area for the processing step of the iteration:
(ii) performing the processing step on the data set associated with the indicator entry; and
(iii) storing the indicator entry in the particular dedicated area of the database for the processing step of the next iteration.

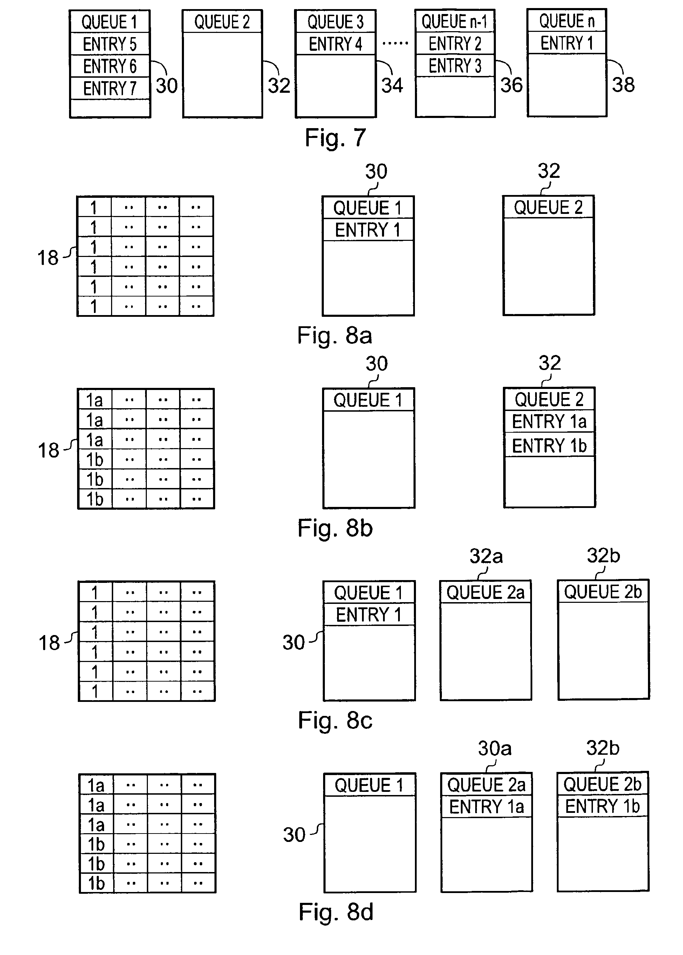

Figure 7 illustrates an example snapshot of various indicator entries stored in various dedicated areas. QUEUE 1 (30) contains indicator entries 5, 6 and 7 associated with data sets 5, 6 and 7 respectively. QUEUE 2 (32) is empty. QUEUE 3 (34) contains indicator entry 4 associated with data set 4. QUEUE n-1 (36) contains indicator entries 2 and 3 associated with data sets 2 and 3. QUEUE n (38) contains indicator entry 1. Advantageously, different processing steps, with certainty of processing in each, can be performed at the same time, increasing the rate of processing.

Figures 8a to 8d illustrate dividing the multiple records into two or more data subjects and dividing or splitting the indicator entry into two or more subject indicator entries.

Figure 8a shows a data set 18, with each record identified with an identifier identifying the data set (here the identifier is "1" for set 1, but other data sets would have other identifiers e.g. "2", "3" ... "10147"). Figure 8a shows the data set 18 and QUEUE 1 (30) and QUEUE 2 (32) before the processing step which is initiated by the corresponding indicator entry (ENTRY 1) being in dedicated area (e.g. table) 30.

Figure 8b illustrates the data set 18 and queues (30 and 32) after the data processing step has been performed. In table 18 the multiple records of the data set have been divided into those marked 1a and those marked 1b so that these records can have different processing operations performed on them. Corresponding subset indicator entries (1a and 1b) have been stored in QUEUE 2 so that a subsequent processing operation of one type can operate on the records marked 1a (e.g., Standing Order transactions) and a subsequent processing operation of another type can operate on the records marked 1b (e.g. Direct Debit transactions), for example to perform dedicated checks for records of different types.

Figures 8c and 8d illustrate an alternative arrangement in which rather than the subject indicator entries being stored in the same queue they are stored in different queues. Figure 8c shows the before processing state and Figure 8d shows the after processing state. Here ENTRY 1a is stored in QUEUE 2a (32a) and ENTRY 1b is stored in QUEUE 2b (32b). Each of these dedicated areas (QUEUE 2a and QUEUE 2b) have a corresponding multiple processing operations which perform a particular processing step on the records associated with the subset indicator entry in the dedicated area.

Thus, in one embodiment the data sets comprise multiple records and performing a processing step on each data set comprises processing each record of the data set, and the atomic database transaction for an iteration comprises:
(i) removing the indicator entry from the particular dedicated area for the processing step of the iteration:
(ii) performing the processing step on the data set associated with the indicator entry, comprising dividing the multiple records into two or more data subsets; and
(iii) storing the indicator entry as two or more subset indicator entries in the particular dedicated area of the database a the processing step of a next iteration, wherein each subset indicator entry is associated with a data subset and indicates that the data subset is ready for processing.

As will be appreciated from Figures 8a to 8d, the subset indicator entries may be stored in the same dedicated area (as illustrated in Figure 8b) or in different dedicated areas (as illustrated in Figure 8d). A different processing step may then be performed on the data associated with a subset indicator entry of one type (e.g. ENTRY 1a in QUEUE 2) than the data associated with a subset indicator entry of another type (e.g. ENTRY 1b in QUEUE 3). Thus a flexible data processing scheme can be provided.

At a later stage the divided records and indicator entries can be combined by recombining the subset indicator entries (e.g. 1a and 1b) to their corresponding indicator entry (e.g. 1) and storing the indicator entry in a common dedicated area for a later processing step.

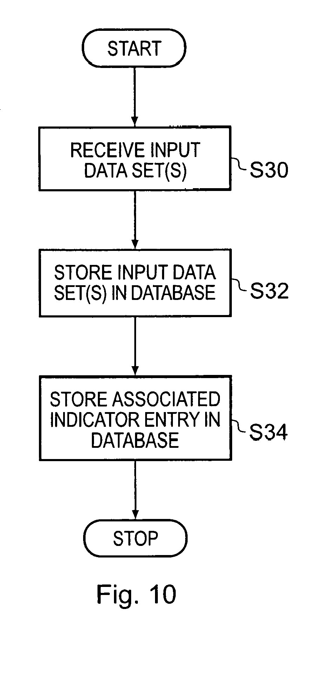

Figure 10 is a flow diagram illustrating the operational steps of a zeroth step (i.e. a step which is performed before the first step). The zeroth processing step comprises receiving one or more input data sets at step S30. At step S32 the input data sets are stored in the database; and at step S34 an associated indicator entry - one indicator entry for each of the input data sets - is stored in the database, e.g. in the dedicated area 20 of the database 14.

In one embodiment steps S32 and S34 are performed as an atomic database transaction. On successful completion of the atomic database transaction sending a confirmation message may be sent the sender of the input data sets. For example a bank may be informed that a batch of records has been successfully received. This means that errors between the sender and the computer 12, e.g. a transmission error or corruption of the batch, and/or errors in the zeroth processing step can be recovered, by the sender resending the batch if a confirmation message is not received.

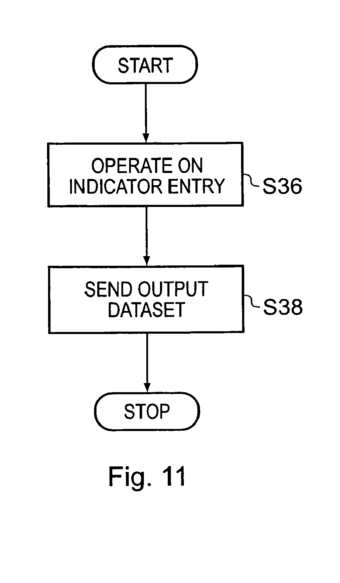

Figure 11 is a flow diagram illustrating the operational steps of an nth (final) step. At step S36 the indicator entry, in the appropriate dedicated area e.g. QUEUE n is operated on (e.g. removed) and one ore more output data sets are sent. For example, the one or more output data sets may comprise records with transactions to accounts of a particular bank and the output data set is sent to that bank.

It will be appreciated that in some embodiments the data set can comprise data representing financial transaction data. In an example embodiment the data sets comprise sets of financial transaction records sent from a various banks. Numbered batches of records are sent by each bank. The financial transaction records include direct credit and direct debit transactions from client accounts of the first bank to client accounts of other banks. The one or more data processing steps check and process or sort the financial transaction records into one or more output data sets. Each output data set comprises records with transactions to accounts of a particular one of the other banks. Each output data set is then sent to the particular other bank (the recipient entity).

In this example the data set contains multiple records and each record comprises: source sort code and account number, destination sort code and account number, transaction type, transaction amount, reference data including the day on which the transaction is to be processed (the input day).

In the example embodiment a zeroth step is performed (following the process of Figure 10) in which a syntax validation processing step is performed between steps S30 and S32. Syntax validation checks that all fields contain data of the correct types, e.g. numeric fields contain only digits. Records failing validation are removed from the data set and passed to a separate exception handling process. If the syntax validation is passed then steps S32 and S34 are performed. Each batch has a unique batch number and the batch number is stored in a first dedicated area (e.g. QUEUE 1 of Figure 6b) as an indicator entry which indicates that the batch of records is ready for the first processing step to be performed.

A first step is then performed (following the process of Figure 9 and removing the batch number at step S24 from the first dedicated area). The first step is performed on the day of arrival of the input data set. The first step performs arrival day validation (i.e., the step is performed on the day that the data set arrives or is received), for example to check against lists of valid codes that the bank codes are valid, that the branch codes are valid, and that the transaction value is within set limits. Records failing validation are removed from the data set and passed to a separate exception handling process. During the first step at step S28 the batch number is stored in a second dedicated area (e.g. QUEUE 2 of Figure 6c).

A second step is then performed (again following the process of Figure 9 and at step S24 removing the batch number from the second dedicated area). The second step is performed on the input day (i.e., the day that the transaction needs to be performed or input). The second step is input day validation. This performs checks on data that may have changed between arrival day and input day, for example to check that there are sufficient funds in the relevant account. Once again, records failing validation are removed from the data set and passed to a separate exception handling process. During the second step at step S28 the batch number is stored in a third dedicated area (e.g. QUEUE 3 of Figure 6d).

A third step is then performed (again following the process of Figure 9 and at step S24 removing the batch number from the third dedicated area). The third step is output tagging. This partitions the records by destination bank by adding a field to each record indicating the bank to which the record will be output. During the second step at step S28 the batch number is stored in a fourth and last dedicated area (e.g. QUEUE n of Figure 6g).

A fourth and final step is performed (following the process of Figure 11 and at step S36 removing the batch number from the nth dedicated area). One or more output data sets are sent to one or more respective destination banks.

In each of the steps multiple parallel processing operations are provided to perform each processing step, as depicted in Figure 6a. Dividing of the multiple records - for example into transactions that are Direct Debit transactions and transactions that are Standing Order transactions - following the method described with reference to Figures 8a to 8d may be performed.

In this example embodiment BACS system functionality can be provided with certainty of processing and good processing rates.

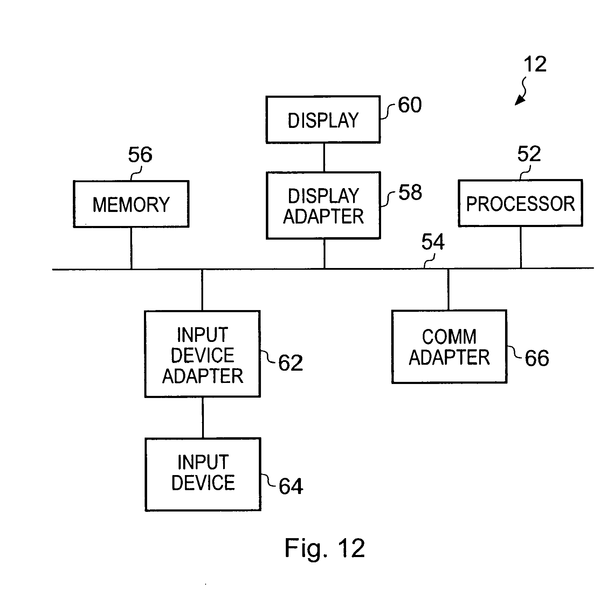

Figure 12 shows a schematic and simplified representation of an apparatus in the form of computer 12 for use in an embodiment of the present invention.

The computer 12 comprises various data processing resources such as a processor 52 coupled to a bus structure 54. Also connected to the bus structure 54 are further data processing resources such as memory 56. A display adapter 58 connects a display 60 to the bus structure 54. A user-input device adapter 62 connects a user-input device 64 to the bus structure 54. A communications adapter 66 is provided thereby providing an interface means for the computer 12 to communicate across network 10 other a computers, e.g. bank computers.

In operation the processor 52 will execute instructions that may be stored in memory 56. The results of the processing performed may be displayed to a user via the display adapter 58 and display device 60. User inputs for controlling the operation of the computer 12 may be received via the user-input device adapter 62 from the user-input device.

It will be appreciated that the architecture of an apparatus or computer could vary considerably and Figure 12 is only one example.

A computer program for implementing steps of the described process can be written in a variety of different computer languages and can be supplied on carrier media (e.g. a carrier disk or carrier signal).

Database 14 may be implemented within computer 12 or on a separate computer. Processing operations 16 may be written in any computer language which can interact with a database. Database 14 supports atomic database transactions and typically is a relational database. In one embodiment the processing operations and modules are implemented as in Java, e.g. as Java threads, and the database is an Oracle SQL database. An atomic database transaction in an SQL database can be implemented by bracketing a process with the expressions "BEGIN WORK" and "COMPLETE WORK". A Java Database Connection (JDBC) is used to interact with the database.

Advantageously, embodiments of the invention can use atomicity to re-set a transaction on failure. Embodiments of the invention can tie the atomic database transaction to the introduction of data to a processing step. Predefined areas in a database (e.g. tables) can be used as an inter-step communication mechanism and indicator entries (e.g. batch numbers) can be passed between processing steps to control the certainty of the individual steps and the overall process being performed with certainty. In embodiments of the invention the reading of the indicator entry from an input boundary (e.g. table), the execution of the processing step and the writing of the token to an output boundary (e.g. table) can all be included as a single atomic database transaction.

Although particular embodiments have been described, these have been given by way of non-limiting examples only. It will be appreciated that variations within the scope of the invention may be made.

## Claims

1. A data processing method for performing a processing step on a data set, wherein one or more data sets are stored in a database and each data set has an associated indicator entry in the database which indicates that the data set is ready for the processing step to be performed, the method comprising:
(a) providing multiple parallel processing operations for performing the processing step on a respective data set, each processing operation arranged to perform an atomic database transaction for an indicator entry and associated data set, the atomic database transaction comprising:
(i) operating on the indicator entry so that it no longer indicates that the data set is ready for the processing step to be performed; and
(ii) performing the processing step on the data set associated with the indicator entry; and
(b) responsive to the presence of an indicator entry in the database which indicates that an associated data set is ready for processing, one of the multiple parallel processing operations performing the atomic database transaction for the indicator entry and associated data set.

2. A method according to claim 1, comprising providing a process initiation manager module arranged to check the database for an indicator entry and responsive to the presence of an indicator entry to initiate one of the multiple parallel processing operations.

3. A method according to claim 1, comprising providing for each of the parallel processing operations a process initiation check module arranged to periodically check the database for an indicator entry and responsive to the presence of an indicator entry to initiate the parallel processing operation.

4. A method according to any preceding claim, wherein the indicator entry is stored in a dedicated area in the database.

5. A method according to claim 4, wherein each set of data has a pre-existing identifier and the pre-existing identifier is used as the indicator entry, the method comprising storing the pre-existing identifier in the dedicated area.

6. A method according to claim 4 or 5, wherein the dedicated area is a database table.

7. A method according to any preceding claim, wherein operating on the indicator entry comprises removing the indicator from the dedicated area.

8. A method according to any preceding claim, wherein one or more of the data sets comprises multiple records and performing the processing step on the data set comprises processing each record of the data set.

9. A method according to claim 8, wherein the processing step comprises dividing the multiple records into two or more data subsets and storing a subset indicator entry for each data subset, wherein the subset indicator entry indicates that the data subset is ready for a further processing step to be performed.

10. A data processing method for performing multiple processing steps on a data set wherein there are n sequential processing steps, n being 2 or more, comprising:
performing n iterations, each iteration comprising a method in accordance with any preceding claim wherein the atomic database transaction for each iteration from the first iteration to the (n-1)th iteration comprises:
(iii) storing in the database the indicator entry for the next processing step.

11. A data processing method according to claim 10, wherein each processing step has a particular dedicated area in the database for storing indicator entries which indicate that the data set is ready for the particular processing step to be performed, and wherein the atomic database transaction for each iteration from the first iteration to the (n-1)th iteration comprises:
(i) removing the indicator entry from the particular dedicated area for the processing step of the iteration:
(ii) performing the processing step on the data set associated with the indicator entry; and
(iii) storing the indicator entry in the particular dedicated area of the database for the processing step of the next iteration.

12. A method according to claim 11, wherein the data sets comprise multiple records and performing a processing step on each data set comprises processing each record of the data set, and wherein the atomic database transaction for an iteration comprises:
(i) removing the indicator entry from the particular dedicated area for the processing step of the iteration:
(ii) performing the processing step on the data set associated with the indicator entry, comprising dividing the multiple records into two or more data subsets; and
(iii) storing the indicator entry as two or more subset indicator entries in the particular dedicated area of the database for a processing step of a next iteration, wherein each subset indicator entry is associated with a data subset and indicates that the data subset is ready for processing.

13. A method according to claim 12, wherein each subset indicator entry is of a subset indicator type and entries of different types are stored in different dedicated areas of the database.

14. A data processing method according to claim 10, 11, 12 or 13, wherein there is a zeroth processing step which is performed before the first of the n sequential processing steps, the zeroth processing step comprising:
(i) receiving one or more input data sets; and
(ii) storing the input data sets in a database; and
(iii) storing an associated indicator entry in the database for each of the input data sets.

15. A data processing method according to claim 14, comprising performing steps (ii) and (iii) as an atomic database transaction and further comprising on successful completion of the atomic database transaction sending a confirmation message to the sender of the input data sets.

16. A data processing method according to claim 10, 11, 12, 13, 14 or 15, wherein the nth processing step comprises sending one or more output data sets to one or more recipient entities.

17. A method according to any preceding claim, wherein the data set comprises data representing financial transaction data.

18. A computer program operable to cause a computer to perform the method of any preceding claim.

19. A carrier medium comprising the computer program of claim 18.

20. A computer configured to perform the method of any of claims 1 to 17.

21. An apparatus comprising a processor configured to perform the method any of claims 1 to 17.
